# EUROPEAN PATENT SPECIFICATION

(11) **EP 3 331 317 B1**
(45) Date of publication and mention of the grant of the patent: **24.07.2019**
(21) Application number: 17205218.5
(22) Date of filing: 04.12.2017
(51) Int. Cl.: H05B 3/14, H05B 3/20, H01C 17/02

(54) **A METHOD TO JOIN NANO TECHNOLOGY CARBON ALLOTROPE HEATERS**
VERFAHREN ZUR VERBINDUNG VON NANOTECHNOLOGIE-KOHLENSTOFF-ALLOTROP-HEIZERN
PROCÉDÉ POUR JOINDRE DES ÉLÉMENTS CHAUFFANTS ALLOTROPES DU CARBONE À TECHNOLOGIE NANOMÉTRIQUE

(30) Priority: 02.12.2016 US 201615368255
(43) Date of publication of application: 06.06.2018
(73) Proprietor: Goodrich Corporation, Charlotte, NC 28217-4578 (US)
(72) Inventor: BOTURA, Galdemir Cezar, Akron, OH 44313 (US); WILSON, Tommy M., Cuyahoga Falls, OH 44223 (US); HARTZLER, Brad, Doylestown, OH 44230 (US)
(74) Representative: Dehns

(56) References cited:
- EP-A2- 1 826 119
- WO-A1-2016/144683
- US-A1- 2010 122 980

## Description

### BACKGROUND

Carbon nanotubes (CNTs) are allotropes of carbon having a generally cylindrical nanostructure, and have a variety of uses in nanotechnology, electronics, optics and other materials sciences. CNTs are both thermally and electrically conductive. Due to these properties, CNTs can be used as heaters for aircraft ice protection, or for other appropriate applications.

CNT heaters are sheets of CNT, sometimes "dry," and other times impregnated with a resin. Sheets of CNT, however, are limited in area, and often more than one CNT sheet heaters must be used to fully de-ice a part of an aircraft or other vehicles. Moreover, aircraft parts can require CNT heaters of differing resistivity. Combining different CNT heaters with varying resistivity is typically done by some sort of joining or splicing.

In the prior art, methods for ice protection included etched circuit, wire wound methods, and carbon fiber heaters. A unique challenge with CNT heaters is attempting to join or splice individual CNT sheet heaters together. This is typically done to connect CNT sheets of similar or different resistivity, or to create longer or wider CNT heaters. Current methods can result in undesirable heat loss or unwanted heat increase where CNT sheet heaters are overlapped. These methods cause heater fatigue, cracking, lost circuits, and are high weight connection methods. A poor splice or joint between CNT heaters can cause cold spots, resulting in ice accumulation between the CNT sheet heaters. Cold spots result in aerodynamic penalties in the flight of the aircraft. In contrast, resulting hot spots overheat heater assemblies.

CNT heaters are described in WO 2016/144683 and EP 1826119.

### SUMMARY

A carbon allotrope heater assembly includes a carrier material, two carbon allotrope heater sheets attached to the carrier material, a carbon allotrope connection sheet binding the two carbon allotrope heater sheets together opposite the carrier material, and an encapsulating material attached to the carbon allotrope connection sheet opposite the two carbon allotrope heater sheets.

A method of making a carbon allotrope heater assembly includes attaching a first carbon allotrope heater to a carrier material, attaching a second carbon allotrope heater to the carrier material adjacent the first carbon allotrope heater, splicing the first carbon allotrope heater to the second carbon allotrope heater with a connection sheet opposite the carrier material, and bonding an encapsulating material over the first carbon allotrope heater, the second carbon allotrope heater, and the first connection sheet.

### BRIEF DESCRIPTION OF THE DRAWINGS

FIG. 1A is a schematic diagram of a CNT heater connection.
FIG. 1B is a schematic diagram of a CNT heater connection in another embodiment.
FIG. 2 is a flow chart depicting a method of joining CNT heaters.

### DETAILED DESCRIPTION

The proposed method and heating assembly allows for CNT heaters to be spliced together without degrading ice removal capability. The method allows for CNT heaters created from CNT solutions of different concentrations (and thus differing resistivity) to be attached, resulting in a large CNT heater for ice protection that is designed to fit a particular aircraft part. The joining of CNT heaters with different concentrations, densities, or dispersions of CNT or other carbon allotropes materials through connector strips eliminates "hot" and "cold" spots on the aircraft parts. "Hot" or "cold" spots result in uneven energy, and consequently insufficient heating, for ice protection, or excessive heating that damages the ice protection assembly across the aircraft part. These spots can also cause a premature failure in an ice protection system due to overheating caused by a "hot" spot.

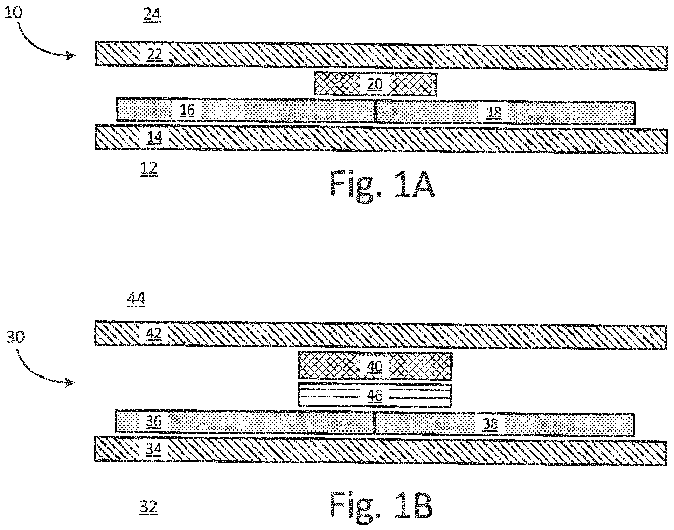

FIG. 1A is a schematic diagram of a nano carbon allotrope heater connection assembly 10. Assembly 10 includes breeze side 12, carrier material 14, first and second CNT heaters 16, 18, CNT connection material 20, encapsulating material 22, and bond side 24. Assembly 10 is an ice protection device, and can be open to an external environment on breeze side 12 or attached to a metallic leading edge skin, a composite leading edge skin, or painted for erosion protection. Breeze side 12 includes carrier material 14, to which CNT heaters 16, 18, are attached. Connection material 20 attaches CNT heaters 16, 18 to each other. Encapsulating material 22 is attached to connection material 20 and is exposed to bond side 24, where assembly 10 can be attached to an aircraft part (not pictured).

Carrier material 14 is closed to the external environment on breeze side 12 of assembly 10, and protects CNT heaters 16, 18 including a plurality of heaters elements. Carrier material 14 can include a film adhesive, a pre-impregnated material, such as a fiberglass pre-preg, polyimide, or neoprene. Carrier material 14 is mechanically bonded to CNT heaters 16, 18, which are adjacent to each other.

CNT heaters 16, 18 can include CNTs (or other carbon allotrope material) on a substrate, such as paper, film, thermoset, or thermoplastic. In this discussion, a CNT heater is used as an example, but any appropriate carbon allotrope heater may be used. The concentration of CNT solutions used to make CNT heaters 16, 18 can be varied depending on the ice protection needs of the aircraft part to which assembly 10 will be attached. Thus, CNT heater 16 can have a different concentration of CNTs, and a different resistance, than CNT heater 18. The difference in resistivity allows assembly 10 to be used on an aircraft for ice protection, and for assembly 10 to apply the correct amount of heat to varying parts of the aircraft part in order to increase the ice protection systems efficiency. Alternatively, a graphene, graphene nanoribbons (GNR) or other nano carbon material can be used in place of CNTs to create heaters 16, 18.

CNT heaters 16, 18 are connected to each other by CNT connection material 20. CNT connection material 20 can be a dry fiber CNT material, a CNT pre-impregnated fabric, or a CNT suspension. Typically, connection material 20 has a different resistivity than CNT heaters 16, 18. This allows for the elimination of "hot" or "cold" spots. If CNT connection material 20 is a dry fiber CNT, and CNT heaters 16, 18 are also dry fiber CNTs, no further bonding materials are needed for connection material 20 to mesh with and bond to CNT heaters 16, 18. If CNT material 20 is a pre-impregnated fabric or a CNT suspension, a conductive epoxy should be used to secure CNT connection material 20 to CNT heaters 16, 18. Although FIG. 1A depicts two CNT heaters 16, 18, assembly 10 can include a plurality of nano carbon heaters and a plurality of connection materials as required by a system to which assembly 10 is applied. Additionally, connection material 20 can be place on any appropriate side of assembly 10 to connect heaters 16, 18, as required by assembly 10.

If CNT heaters 16, 18 have the same or similar resistivity, then no perforations are required in CNT connection material 20. If, however, the resistivity of CNT connection material 20 must be adjusted to work with CNT heaters 16, 18, then holes may be perforated in CNT connection material 20. CNT materials typically have multiple redundant passes, thus, if the material is perforated, the material can still act as a heater. Additionally, holes may be perforated in CNT connection material 20 to allow electrical connections, such as wires or bus bars, to be directly attached to CNT heaters 16, 18.

Encapsulating material 22 covers CNT heaters 16, 18 and CNT connection material 20, encapsulating assembly 10. Encapsulating material 22 can include a film adhesive, a pre-impregnated material, such as a fiberglass pre-preg, polyimide, or neoprene. Encapsulating material 22 is on bond side 24 of assembly 10, and will be closer to an aircraft part when assembly 10 is installed for ice protection purposes.

FIG. 1B is a schematic diagram of CNT heater connection assembly 30 in another embodiment. Assembly 30 includes breeze side 32, carrier material 34, first and second CNT heaters 36, 38, CNT connection material 40, encapsulating material 42, bond side 44, and conductive adhesive 46. Assembly 30 is similar to assembly 10 in FIG. 1A, and has many of the same components connected in the same fashion. FIG. 1B shows an embodiment where CNT connection material 40 is a CNT suspension material. In this case, adhesive 46, such as an epoxy, must be used to secure CNT connection material 40 to CNT heaters 36, 38. Typically, adhesive 46 must be conductive, and can be co-cured with the attachment to secure assembly 30.

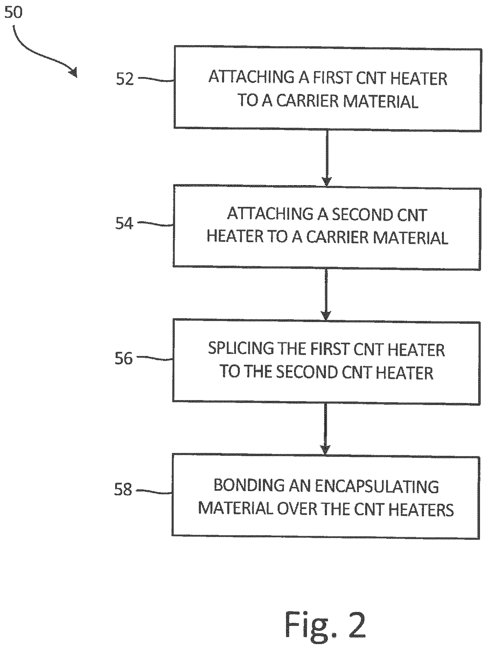

FIG. 2 is a flow chart depicting method 50 of joining CNT heaters. Method 50 begins with step 52, where a first CNT heater is attached to a carrier material. The first CNT heater can be a CNT solution on a substrate such as a paper, thermoset, or thermoplastic. The carrier material can be a film adhesive, a pre-impregnated material, such as a fiberglass pre-preg, or neoprene. The first CNT heater can be attached to the carrier material through mechanical or chemical means, such as an adhesive. Next, a second CNT heater is attached to the carrier material adjacent to the first CNT heater in step 54.

In step 56, the first and second CNT heaters are spliced together. This is done with a first connection sheet opposite the carrier material. The connection sheet may be a dry fiber CNT material, a CNT pre-impregnated fabric, or a CNT suspension. If the connection sheet is a dry fiber CNT material and the CNT heater is dry fiber, no additional adhesive is necessary. If the connection sheet is a CNT pre-preg or suspension, then a conductive adhesive, such as an epoxy, can be used. Optionally, the connection sheet can be perforated to adjust the resistivity, or to allow for power connections to the CNT heaters. Steps 52 - 56 can be repeated multiple times with a plurality of CNT heaters and connection sheets to create a larger, connected CNT heater with the correct resistivity for a certain part of an aircraft in need of ice protection.

Finally, in step 58, an encapsulating material is bonded over the first CNT heater, the second CNT heater, and the connection sheet. The encapsulating material can be a film adhesive, a pre-impregnated material, such as a fiberglass pre-preg, or neoprene, and will be on the bond side of the assembly. The encapsulating material protects the assembly.

The proposed method creates a CNT heater for ice protection which is lightweight and allows for temperature uniformity. Thus, when the heater is working, the entire surface of the aircraft part is heated at the same time, equally across zones, instead of heating the gaps between heating elements in current ice protection systems.

### Discussion of Possible Embodiments

The following are non-exclusive descriptions of possible embodiments of the present invention.

A carbon allotrope heater assembly includes a carrier material, two carbon allotrope heater sheets attached to the carrier material, a carbon allotrope connection sheet binding the two carbon allotrope heater sheets together opposite the carrier material, and an encapsulating material attached to the carbon allotrope connection sheet opposite the two carbon allotrope heater sheets.

The assembly of the preceding paragraph can optionally include, additionally and/or alternatively, any one or more of the following features, configurations and/or additional components:

The assembly includes a conductive adhesive between the two carbon allotrope heater sheets and the carbon allotrope connection sheet.

The carrier material is selected from the group consisting of a film adhesive, a fiberglass pre-preg, a polyimide or a neoprene

The encapsulating material is selected from the group consisting of a film adhesive, a fiberglass pre-preg, a polyimide or a neoprene.

The conductive adhesive is an epoxy.

The carbon allotrope connection sheet comprises carbon nanotubes suspended in a substrate.

The carbon allotrope connection sheet is a dry carbon nanotube fiber material.

The carbon connection allotrope sheet is perforated.

The first carbon allotrope heater sheet contains a different concentration of carbon allotropes than the second carbon allotrope heater sheet.

The first and second carbon allotrope heaters are comprised of carbon nanotubes, grapehene, or graphene nanoribbons.

A method of making a carbon allotrope heater assembly includes attaching a first carbon allotrope heater to a carrier material, attaching a second carbon allotrope heater to the carrier material adjacent the first carbon allotrope heater, splicing the first carbon allotrope heater to the second carbon allotrope heater with a connection sheet opposite the carrier material, and bonding an encapsulating material over the first carbon allotrope heater, the second carbon allotrope heater, and the first connection sheet.

The method of the preceding paragraph can optionally include, additionally and/or alternatively, any one or more of the following features, configurations and/or additional components:

The method includes attaching a third carbon allotrope heater to the carrier material adjacent the second carbon allotrope heater, and splicing the second carbon allotrope heater to the third carbon allotrope heater with a second connection sheet opposite the carrier material.

The method includes bonding the first connection sheet to the first and second carbon allotrope heaters with a conductive adhesive.

The method includes curing the carbon allotrope heater assembly.

The method includes perforating the first connection sheet.

The method includes attaching one or more wires to the first and second carbon allotrope heaters through a perforation in the first connection sheet.

The method includes connecting the one or more wires to external electronics.

The second connection sheet has a different resistivity than the first connection sheet.

The second connection sheet has a different resistivity than the third connection sheet.

The first and second carbon allotrope heaters are made by depositing a carbon allotrope solution onto a substrate.

While the invention has been described with reference to an exemplary embodiment(s), it will be understood by those skilled in the art that various changes may be made and equivalents may be substituted for elements thereof without departing from the scope of the invention as defined by the claims. In addition, many modifications may be made to adapt a particular situation or material to the teachings of the invention without departing from the scope thereof. Therefore, it is intended that the invention not be limited to the particular embodiment(s) disclosed, but that the invention will include all embodiments falling within the scope of the appended claims.

## Claims

1. A carbon allotrope heater assembly comprising:
a carrier material (14); and
two carbon allotrope heater sheets (16, 18) attached to the carrier material; and
an encapsulating material (22) attached to the two carbon allotrope heater sheets opposite the carrier material;
**characterized by** a carbon allotrope connection sheet (20) binding the two carbon allotrope heater sheets together.

2. The assembly of claim 1, further comprising a conductive adhesive (46) between the two carbon allotrope heater sheets and the carbon allotrope connection sheet.

3. The assembly of claim 1 or 2, wherein the carrier material is selected from the group consisting of a film adhesive, a fiberglass pre-preg, a polyimide or a neoprene.

4. The assembly of claim 1, 2 or 3, wherein the encapsulating material is selected from the group consisting of a film adhesive, a fiberglass pre-preg, a polyimide or a neoprene.

5. The assembly of any of claims 1 to 4, wherein the carbon allotrope connection sheet comprises carbon nanotubes suspended in a substrate, or wherein the carbon allotrope connection sheet is a dry carbon nanotube fiber material, and/or preferably wherein the carbon connection allotrope sheet is perforated.

6. The assembly of any preceding claim, wherein the first carbon allotrope heater sheet contains a different concentration of carbon molecules than the second carbon allotrope heater sheet.

7. The assembly of any preceding claim, wherein the first and second carbon allotrope heaters are comprised of carbon nanotubes, graphene, or graphene nanoribbons.

8. A method of making a carbon allotrope heater assembly **characterized by** comprising:
attaching a first carbon allotrope heater (16) to a carrier material (14);
attaching a second carbon allotrope heater (18) to the carrier material adjacent the first carbon allotrope heater;
splicing the first carbon allotrope heater to the second carbon allotrope heater with a first connection sheet (20) opposite the carrier material; and
bonding an encapsulating material (22) over the first carbon allotrope heater, and the second carbon allotrope heater.

9. The method of claim 8, further comprising attaching a third carbon allotrope heater to the carrier material adjacent the second carbon allotrope heater, and splicing the second carbon allotrope heater to the third carbon allotrope heater with a second connection sheet opposite the carrier material.

10. The method of claim 8 or 9, further comprising bonding the first connection sheet to the first and second carbon allotrope heaters with a conductive adhesive.

11. The method of claim 8, 9 or 10, further comprising curing the carbon allotrope heater assembly.

12. The method of any of claims 8 to 11, further comprising perforating the first connection sheet, and further comprising attaching one or more wires to the first and second carbon allotrope heaters through a perforation in the first connection sheet.

13. The method of any of claims 8 to 12, wherein the second connection sheet has a different resistivity than the first connection sheet.

14. The method of claim 9 wherein the second connection sheet has a different resistivity than the third connection sheet.

15. The method of any of claims 8 to 14, wherein the first and second carbon allotrope heaters are made by depositing a carbon nanotube solution onto a substrate.

## Patentansprüche

1. Kohlenstoff-Allotrop-Heizer-Baugruppe, umfassend:
ein Trägermaterial (14); und
zwei Kohlenstoff-Allotrop-Heizer-Folien (16, 18), die an dem Trägermaterial befestigt sind; und
ein Verkapselungsmaterial (22), das gegenüber dem Trägermaterial an den zwei Kohlenstoff-Allotrop-Heizer-Folien befestigt ist;
**gekennzeichnet durch** eine Kohlenstoff-Allotrop-Verbindungsfolie (20), die die zwei Kohlenstoff-Allotrop-Heizer-Folien miteinander verbindet.

2. Baugruppe nach Anspruch 1, ferner umfassend einen leitfähigen Klebstoff (46) zwischen den zwei Kohlenstoff-Allotrop-Heizer-Folien und der Kohlenstoff-Allotrop-Verbindungsfolie.

3. Baugruppe nach Anspruch 1 oder 2, wobei das Trägermaterial ausgewählt ist aus der Gruppe, bestehend aus einem Dünnschichtklebstoff, einem Glasfaser-Prepreg, eine Polyimid oder einem Neopren.

4. Baugruppe nach Anspruch 1, 2 oder 3, wobei das Verkapselungsmaterial ausgewählt ist aus der Gruppe, bestehend aus einem Dünnschichtklebstoff, einem Glasfaser-Prepreg, einem Polyimid oder einem Neopren.

5. Baugruppe nach einem der Ansprüche 1 bis 4, wobei die Kohlenstoff-Allotrop-Verbindungsfolie Kohlenstoff-Nanoröhrchen umfasst, die in einem Substrat suspendiert sind, oder wobei die Kohlenstoff-Allotrop-Verbindungsfolie ein trockenes Kohlenstoff-Nanoröhrchen-Fasermaterial ist, und/oder wobei vorzugsweise die Kohlenstoff-Verbindungs-Allotrop-Folie perforiert ist.

6. Baugruppe nach einem der vorstehenden Ansprüche, wobei die erste Kohlenstoff-Allotrop-Heizer-Folie eine andere Kohlenstoffmolekülkonzentration enthält als die zweite Kohlenstoff-Allotrop-Heizer-Folie.

7. Baugruppe nach einem der vorstehenden Ansprüche, wobei der erste und zweite Kohlenstoff-Allotrop-Heizer aus Kohlenstoff-Nanoröhrchen, Graphen oder Graphen-Nanobändern besteht.

8. Verfahren zum Herstellen einer Kohlenstoff-Allotrop-Heizer-Baugruppe, **dadurch gekennzeichnet, dass** es Folgendes umfasst:
Befestigen eines ersten Kohlenstoff-Allotrop-Heizers (16) an einem Trägermaterial (14);
Befestigen eines zweiten Kohlenstoff-Allotrop-Heizers (18) an dem Trägermaterial benachbart zu dem ersten Kohlenstoff-Allotrop-Heizer;
Spleißen des ersten Kohlenstoff-Allotrop-Heizers an den zweiten Kohlenstoff-Allotrop-Heizer mit einer ersten Verbindungsfolie (20) gegenüber dem Trägermaterial; und
Verbinden eines Verkapselungsmaterials (22) über dem ersten Kohlenstoff-Allotrop-Heizer, und dem zweiten Kohlenstoff-Allotrop-Heizer.

9. Verfahren nach Anspruch 8, ferner umfassend das Befestigen eines dritten Kohlenstoff-Allotrop-Heizers an dem Trägermaterial benachbart zu dem zweiten Kohlenstoff-Allotrop-Heizer und Spleißen des zweiten Kohlenstoff-Allotrop-Heizers an den dritten Kohlenstoff-Allotrop-Heizer mit einer zweiten Verbindungsfolie gegenüber des Trägermaterials.

10. Verfahren nach Anspruch 8 oder 9, ferner umfassend das Verbinden der ersten Verbindungsfolie mit dem ersten und zweiten Kohlenstoff-Allotrop-Heizer mit einem leitfähigen Klebstoff.

11. Verfahren nach Anspruch 8, 9, oder 10, ferner umfassend das Härten der Kohlenstoff-Allotrop-Heizer-Baugruppe.

12. Verfahren nach einem der Ansprüche 8 bis 11, ferner umfassend das Perforieren der ersten Verbindungsfolie und ferner umfassend das Befestigen eines oder mehrerer Drähte an dem ersten und zweiten Kohlenstoff-Allotrop-Heizer durch eine Perforation in der ersten Verbindungsfolie.

13. Verfahren nach einem der Ansprüche 8 bis 12, wobei die zweite Verbindungsfolie einen anderen spezifischen Widerstand aufweist als die erste Verbindungsfolie.

14. Verfahren nach Anspruch 9, wobei die zweite Verbindungsfolie einen anderen spezifischen Widerstand aufweist als die dritte Verbindungsfolie.

15. Verfahren nach einem der Ansprüche 8 bis 14, wobei der erste und zweite Kohlenstoff-Allotrop-Heizer durch Aufbringen einer Kohlenstoff-Nanoröhrchen-Lösung auf ein Substrat hergestellt werden.

## Revendications

1. Ensemble d'éléments chauffants allotropes du carbone comprenant :
un matériau de support (14) ; et
deux feuilles chauffantes allotropes du carbone (16, 18) fixées au matériau de support ; et
un matériau d'encapsulation (22) fixé aux deux feuilles chauffantes allotropes du carbone opposées au matériau de support ;
**caractérisé par** une feuille de liaison allotrope du carbone (20) liant les deux feuilles chauffantes allotropes du carbone.

2. Ensemble selon la revendication 1, comprenant en outre un adhésif conducteur (46) entre les deux feuilles chauffantes allotropes du carbone et la feuille de liaison allotrope du carbone.

3. Ensemble selon la revendication 1 ou 2, dans lequel le matériau de support est choisi dans le groupe constitué d'un film adhésif, d'un préimprégné en fibre de verre, d'un polyimide ou d'un néoprène.

4. Ensemble selon la revendication 1, 2 ou 3, dans lequel le matériau d'encapsulation est choisi dans le groupe constitué d'un film adhésif, d'un préimprégné en fibre de verre, d'un polyimide ou d'un néoprène.

5. Ensemble selon l'une quelconque des revendications 1 à 4, dans lequel la feuille de liaison allotrope du carbone comprend des nanotubes de carbone en suspension dans un substrat, ou dans lequel la feuille de liaison allotrope du carbone est un matériau de fibres de nanotubes de carbone sèches, et/ou de préférence dans lequel la feuille de liaison allotrope du carbone est perforée.

6. Ensemble selon une quelconque revendication précédente, dans lequel la première feuille chauffante allotrope du carbone contient une concentration en molécules de carbone différente de celle de la deuxième feuille chauffante allotrope du carbone.

7. Ensemble selon une quelconque revendication précédente, dans lequel les premier et deuxième éléments chauffants allotrope du carbone sont constitués de nanotubes de carbone, de graphène ou de nanorubans de graphène.

8. Procédé de fabrication d'un ensemble d'éléments chauffants allotropes du carbone **caractérisé en ce qu'**il comprend :
la fixation d'un premier élément chauffant allotrope du carbone (16) à un matériau de support (14) ;
la fixation d'un deuxième élément chauffant allotrope du carbone (18) à un matériau de support adjacent au premier élément chauffant allotrope du carbone ;
l'épissage du premier élément chauffant allotrope du carbone au deuxième élément chauffant allotrope du carbone avec une première feuille de liaison (20) opposée au matériau de support ; et
l'adhérence d'un matériau d'encapsulation (22) sur le premier élément chauffant allotrope du carbone et sur le deuxième élément chauffant allotrope du carbone.

9. Procédé selon la revendication 8, comprenant en outre la fixation d'un troisième élément chauffant allotrope du carbone au matériau de support adjacent au deuxième élément chauffant allotrope du carbone, et l'épissage du deuxième élément chauffant allotrope du carbone au troisième élément chauffant allotrope du carbone avec une deuxième feuille de liaison opposée au matériau de support.

10. Procédé selon la revendication 8 ou 9, comprenant en outre l'adhérence de la première feuille de liaison sur les premier et deuxième éléments chauffants allotropes du carbone avec un adhésif conducteur.

11. Procédé selon la revendication 8, 9 ou 10, comprenant en outre le durcissement de l'ensemble d'éléments chauffants allotropes du carbone.

12. Procédé selon l'une quelconque des revendications 8 à 11, comprenant en outre la perforation de la première feuille de liaison, et comprenant en outre la fixation d'un ou de plusieurs fils aux premier et deuxième éléments chauffants allotropes du carbone au moyen d'une perforation dans la première feuille de liaison.

13. Procédé selon l'une quelconque des revendications 8 à 12, dans lequel la deuxième feuille de liaison a une résistivité différente de celle de la première feuille de liaison.

14. Procédé selon la revendication 9, dans lequel la deuxième feuille de liaison a une résistivité différente de celle de la troisième feuille de liaison.

15. Procédé selon l'une quelconque des revendications 8 à 14, dans lequel les premier et deuxième éléments chauffants allotropes du carbone sont fabriqués en déposant une solution de nanotubes de carbone sur un substrat.
